# EUROPEAN PATENT APPLICATION

(11) **EP 2 366 543 A1**
(43) Date of publication of application: **21.09.2011**
(21) Application number: 10157069.5
(22) Date of filing: 19.03.2010
(51) Int. Cl.: B32B 37/15, B29C 44/20, E04F 15/10

(54) **A method of manufacturing a floor panel and a floor panel**

(71) Applicant: Spanolux N.V. - Div. Balterio, 8710 Sint-Baafs-Vijve (BE)
(72) Inventor: Vermeulen, Bruno Paul Louis, 3680 Aldeneik-Maaseik (BE)
(74) Representative: van Helden, Marinus

(57) **Abstract**

A method of manufacturing a floor panel with insulating properties comprises the steps of supplying a panel (1) having an upper side (2) and a back side (3), applying a curable substance (5) to the back side (3) of the panel (1) and curing the substance (5) for forming a layer (7) with insulating properties.

## Description

A method of manufacturing a floor panel and a floor panel

The present invention relates to a method of manufacturing a floor panel with insulating properties.

Particularly in the field of laminated floor panels, it is known to lay a sound damping layer such as a sheet of felt or foam between the floor panels and the ground in order to reduce the noise of movement in floor panels. In certain cases the sound damping layer is already glued to the back sides of the panels before laying the floor panels on the ground.

The present invention aims to provide a method of manufacturing floor panels with insulating properties in an efficient manner.

For this purpose the method according to the invention comprises the steps of supplying a panel having an upper side and a back side, applying a curable substance to the back side of the panel, and curing the substance for forming a layer with insulating properties.

The insulating properties are primarily related to sound damping, but they may provide thermal insulation, as well. The advantage of the method according to the invention is that an insulating layer can be applied to the panel without gluing or laminating a separate layer to the panel. The curable substance can be applied in a single step. In practice the curable substance will be selected such that it adheres to the panel. The floor panel may be a laminated panel, but alternative panels such as a wood, WPC or vinyl panel are conceivable, as well.

The insulating properties may be such that the sound damping of the floor panel is higher than 10 dB.

The formed layer may have a thickness of at least 0,25 mm. The thickness of the formed layer may be a compromise between the compressibility and the sound damping properties thereof. Increasing the thickness of the insulating layer may provide a higher sound damping, but give a less stable feeling when walking on the floor panel. The compressibility is not only advantageous in terms of sound damping, but also in terms of compensating unevenness of the ground on which the panels are laid.

The curable substance may be a non-gaseous fluid, for example a liquid or a paste. This means that the substance can flow and may comprise gaseous components, but is not gaseous entirely. Preferably, the curable substance is a composition for forming a foam layer, because a relatively low volume of substance can be applied onto the panel whereas a relatively high compressible volume can be created during curing. Applying a relatively low volume of curable substance provides the opportunity to accelerate the manufacturing process.

In a preferred embodiment the curable substance is applied to the entire back side. This is advantageous in comparison with prior art methods in which a separate layer is fixed to the panel, for example by means of glue, which separate layer is cut in almost the same dimensions as the back side of the panel. However, since the panel and the separate layer must be laid onto each other in a high speed production process it appears that in practice they do not exactly match to each other due to production tolerances. Furthermore, in case of changing the manufacturing process to panels having different dimensions the method according to the invention can be adapted easier than in case of separate layers which have to be cut in different sizes. In other words, the method according to the invention facilitates to apply the substance onto the entire back side.

The curable substance may be heated during the curing step. For example, in case of a foamable substance the foaming process can be activated by heat and a layer of foam will arise on the back side.

The thickness of the curable substance can be controlled by pressing onto the substance by a press member after applying the substance to the back side of the panel. Particularly in case of a foamable substance the press member may be cooled to control the foaming reaction.

Preferably, the manufacturing steps are performed in a continuous process, since this maximizes the speed of manufacturing.

The panel may be provided with coupling members before applying the curable substance or after curing the substance so as to form the floor panel. In these cases the panel has already been cut out of a large panel or sheet before providing the coupling members or before applying the curable substance or providing the coupling members, respectively. The coupling members are intended to couple adjacent panels together and are provided on two opposite sides of the panels and preferably on all sides thereof. For example, the coupling members are formed by tongues and grooves trough milling the sides of the panel. In these cases the insulating layer preferably covers the entire back side of the panel, which means that in a coupled condition of two adjacent floor panels the insulating layers thereof are adjacent to each other and preferably form a substantially continuous layer. In practice, the entire back side of the panel means the flat back side excluding any machined parts such as coupling members.

Alternatively the panel is cut into at least two intermediate floor panels after curing the substance, after which at least one of said at least two intermediate floor panels is provided with coupling members so as to form the floor panel. In this case the curable substance is applied to a relatively large panel or sheet which is subsequently cut in pieces which are finished to form floor panels that can be coupled to each other. In this case the insulating layer automatically covers the entire back side of the floor panels such that in a coupled condition of two adjacent floor panels the insulating layers thereof are adjacent to each other and form a substantially continuous layer.

The invention is also related to a floor panel having an upper side and a back side, wherein the entire back side is provided with an insulating layer. Contrary to prior art methods, such a panel can be obtained by applying the method of manufacturing according to the invention. The advantage of the floor panel according to the invention is that the entire back side of the panel is supported when it is laid on the ground.

The invention is also related to a floor panel having an upper side and a back side, wherein an insulating layer is foamed against the back side. This means that the insulating layer adheres to the panel without using a separate glue layer.

The invention will hereafter be elucidated with reference to a very schematic drawing showing an embodiment of the invention by way of example.

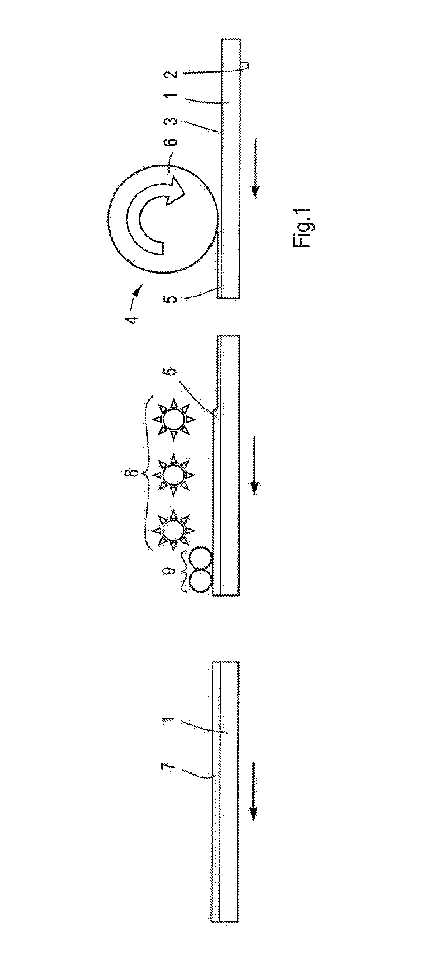

Fig. 1 is an illustrative view of an embodiment of the method of manufacturing a panel according to the invention.

The invention is related to a method of manufacturing a floor panel with insulating properties. An embodiment of the method is schematically illustrated by means of a manufacturing process as shown in Fig. 1. The method is performed in a continuous process and starts with supplying a panel 1 at the right side of the drawing. The panel 1 may be a laminated floor panel including a core of wood or a wood-based material such as HDF, MDF or WPC. The panel 1 has an upper side 2 and a back side 3. On its upper side 2 the panel 1 is covered with an impregnated decorative paper and a wear resistant overlay. On the back side 3 the panel 1 is provided with a balancing layer to compensate for internal mechanical stresses in the floor panel. It is noted that in an alternative embodiment the panel may be provided with a decoration pattern through direct printing, possibly covered by an anti-wear coating, instead of a laminated panel.

In the embodiment as shown in Fig. 1 the back side 3 of the panel 1 is directed upwardly. At a coating station 4 a curable substance 5 is applied to the back side 3 of the panel 1. This is performed by a roller coater 6 which is rotated whereas the panel 1 is moved along the roller coater 6. The curable substance 5 is applied to the entire back side 3 of the panel 1. This means that a flat portion of the back side 3 without profiles of possible coupling members such as a lower side of a tongue is covered by the curable substance 5.

In this embodiment the curable substance 5 is a chemical composition that forms a foam layer 7 after a curing step. As illustrated in Fig. 1 the substance 5 is heated by heaters 8 and consequently the thickness of the substance 5 increases due to the activated foaming reaction. In order to control the foaming reaction and to avoid an excessive increase in thickness cooled press rollers or calander drums 9 contact the substance 5 during the curing step. After the curing step, comprising both heating and cooling the substance in this embodiment, the panel 1 is provided with the foam layer 7 on its back side 3.

In practice the substance 5 is selected such that the panel 1 is provided with a foam layer 7 of 0,5 - 6 mm which gives the panel 1 such sound insulating properties that it damps the sound by more than 10 dB according to ISO 717-2 and ISO 140-8. Furthermore, in practice the curable substance 5 is such that it adheres to the back side 3 of the panel 1.

From the foregoing, it will be clear that the invention provides a relatively simple method of manufacturing a floor panel with sound insulating properties.

The invention is not limited to the embodiment shown in the drawing and described hereinbefore, which may be varied in different manners within the scope of the claims and the technical equivalents. For example, the curable substance may have alternative properties so as to form a compressible, sound damping layer. Furthermore, alternative steps of curing may be just drying at ambient temperature without exhibiting the back side of the panel to elevated temperature.

## Claims

1. A method of manufacturing a floor panel witch insulating properties, comprising the steps of supplying a panel (1) having an upper side (2) and a back side (3), applying a curable substance (5) to the back side (3) of the panel (1), curing the substance (5) for forming a layer (7) with insulating properties.

2. A method according to claim 1, wherein the insulating properties are such that the sound damping of the floor panel is higher than 10 dB according to ISO 717-2 and ISO 140-8.

3. A method according to claim 1 or 2, wherein the formed layer (7) has a thickness of at least 0,25 mm.

4. A method according to claim 1 or 2, wherein the layer (7) is compressible.

5. A method according to one of the preceding claims, wherein the curable substance (5) is a non-gaseous fluid.

6. A method according to one of the preceding claims, wherein the curable substance (5) is a composition for forming a foam layer (7).

7. A method according to one of the preceding claims, wherein the curable substance (5) is applied to the entire back side (3).

8. A method according to one of the preceding claims, wherein the curable substance (5) is heated during the curing step.

9. A method according to one of the preceding claims, wherein the thickness of the curable substance (5) is controlled by pressing onto the substance (5) by a press member (9) after applying said substance (5) to the back side (3) of the panel (1).

10. A method according to claim 6 and 9, wherein the press member (9) is cooled to control the foaming reaction.

11. A method according to one of the preceding claims, wherein the steps are performed in a continuous process.

12. A method according to claim 11, wherein the curable substance (5) is applied by a roller coater (6), a row of spraying nozzles, or the like.

13. A method according to one of the preceding claims, wherein the panel (1) is provided with coupling members before applying the curable substance (5) or after curing the substance (5) so as to form the floor panel, or wherein the panel (1) is cut into at least two intermediate floor panels after curing the substance (5) after which at least one of said at least two intermediate floor panels is provided with coupling members so as to form the floor panel.

14. A floor panel having an upper side (2) and a back side (3), wherein the entire back side (3) is provided with an insulating layer (7).

15. A floor panel having an upper side (2) and a back side (3), wherein an insulating layer (7) is foamed against the back side (3).
